# EUROPÄISCHE PATENTANMELDUNG

(11) **EP 3 995 778 A2**
(43) Veröffentlichungstag der Anmeldung: **11.05.2022**
(21) Anmeldenummer: 21206596.5
(22) Anmeldetag: 05.11.2021
(51) Int. Cl.: G01B 3/20

(54) **MESSSCHIEBER**

(30) Priorität: 06.11.2020 DE 102020006820; 08.07.2021 DE 102021207226
(71) Anmelder: Finkbeiner, Klaus, 74523 Schwäbisch Hall (DE)
(72) Erfinder: Finkbeiner, Klaus, 74523 Schwäbisch Hall (DE)
(74) Vertreter: Patentanwälte Magenbauer & Kollegen Partnerschaft mbB

(57) **Zusammenfassung**

Bei einem Messschieber, mit einem eine Längsachse (13) aufweisenden Stab (14), an dem ein mit einem Messkörper (16) ausgestatteter erster Messschenkel (17) angeordnet ist, der in der Achsrichtung einer zu der Längsachse (13) rechtwinkligen Querachse (50) von dem Stab (14) weg ragt, und mit einem am Stab (14) entlang dessen Längsachse (13) beweglich geführten Schieberelement (19), an dem ein mit einem Messkörper (20) ausgestatteter, dem ersten Messschenkel (17) gegenüberliegender zweiter Messschenkel (21) derart angeordnet ist, dass der Abstand der beiden jeweils eine Außenkontur (22, 23) aufweisenden Messkörper (16) entlang einer von der Längsachse (13) und der Querachse (50) aufgespannten Messebene (24) zueinander veränderbar ist, wobei der Messkörper (16) des ersten Messschenkels (17) und/oder der Messkörper (20) des zweiten Messschenkels (21) sich zu seinem freien Ende (25) hin zumindest abschnittsweise kegelförmig verjüngend ausgebildet ist, derart, dass er beim Messvorgang in eine zugeordnete Bohrung (45) je nach Bohrungsdurchmesser mehr oder weniger weit selbstzentrierend eintauchen kann, und wobei der Messschieber (11) eine Anzeigeeinheit (35) zum Anzeigen des durch den Abstand der Messkörper (16, 20) der Messschenkel (17, 21) zueinander definierten Messwertes aufweist, sind die Außenkonturen (22, 23) der Messkörper (16, 20) der Messschenkel (17, 21) derart ausgebildet, dass die Messschenkel (17, 21) Messstellungen zueinander einnehmen können, in denen sich die Messkörper (16, 20) in der Messebene (24) in der Achsrichtung der Längsachse (13) überlappen.

## Beschreibung

Die Erfindung betrifft einen Messschieber, mit einem eine Längsachse aufweisenden Stab, an dem ein mit einem Messkörper ausgestatteter erster Messschenkel angeordnet ist, der in der Achsrichtung einer zu der Längsachse rechtwinkligen Querachse von dem Stab weg ragt, und mit einem am Stab entlang dessen Längsachse beweglich geführten Schieberelement, an dem ein mit einem Messkörper ausgestatteter, dem ersten Messschenkel gegenüberliegender zweiter Messschenkel derart angeordnet ist, dass der Abstand der beiden jeweils eine Außenkontur aufweisenden Messkörper entlang einer von der Längsachse und der Querachse aufgespannten Messebene zueinander veränderbar ist, wobei der Messkörper des ersten Messschenkels und/oder der Messkörper des zweiten Messschenkels sich zu seinem freien Ende hin zumindest abschnittsweise kegelförmig verjüngend ausgebildet ist, derart, dass er beim Messvorgang in eine zugeordnete Bohrung je nach Bohrungsdurchmesser mehr oder weniger weit selbstzentrierend eintauchen kann, und wobei der Messschieber eine Anzeigeeinheit zum Anzeigen des durch den Abstand der Messkörper der Messschenkel zueinander definierten Messwertes aufweist.

Derartige Messschieber, die auch als Schieblehren oder Kaliber bezeichnet werden, sind bereits seit langem bekannt und werden in verschiedensten Varianten bei der Längenmessung insbesondere im Maschinen- und Metallbau eingesetzt. Solche Messschieber zeichnen sich durch eine relativ hohe Messgenauigkeit aus, sind einfach und schnell zu bedienen und sind insgesamt relativ robust.

Mit derartigen Messschiebern lassen sich Abstandsmessungen von Bohrungen, Gewinden, Löchern, Langlöchern zu einer Außenkante oder alternativ Abstandmessungen von Löchern bzw. Bohrungen zueinander durchführen.

Bei der Messung von sehr kleinen Abständen beispielsweise zwischen einer Außenkante und dem Mittelpunkt einer Bohrung oder zwischen zwei Bohrungsmittelpunkten stoßen die herkömmlichen Messschieber an ihre Grenzen, da die Messschenkel dieser Messschieber für derartige Messungen nicht geeignet sind.

Aufgabe ist es daher, ein Messschieber der eingangs erwähnten Art zu schaffen, mit dem sich bei guter Bedienbarkeit und guter Ablesbarkeit des Messwertes mittels der Anzeigeeinrichtung auch geringe Abstände zuverlässig messen lassen.

Diese Aufgabe wird durch einen Messschieber mit den Merkmalen des unabhängigen Anspruchs 1 und den Merkmalen des unabhängigen Anspruchs 13 gelöst. Weiterbildungen der Erfindung sind in den Unteransprüchen dargestellt.

Der erfindungsgemäße Messschieber zeichnet sich dadurch aus, dass die Außenkonturen der Messkörper der Messschenkel derart ausgebildet sind, dass die Messschenkel Messstellungen zueinander einnehmen können, in denen sich die Messkörper in der Messebene in der Achsrichtung der Längsachse überlappen.

Dadurch wird verhindert, dass sich die Messschenkel bei der Messung kleiner Abstände gegenseitig blockieren. Durch die Überlappungsmöglichkeit der Messkörper lassen sich auch sehr kleine Abstände der Messschenkel zueinander einstellen, wodurch der Messschieber insgesamt auch für die Abstandsmessung sehr kleiner Abstände geeignet ist. Besonders bevorzugt sind die Messkörper derart ausgebildet, dass ein vollständiges Zusammenschieben der beiden Messschenkel, also auf den Abstand Null möglich ist. Dadurch, dass wenigstens einer der beiden Messschenkel einen Messkörper aufweist, der zu seinem freien Ende hin sich zumindest abschnittsweise kegelförmig verjüngend ausgebildet ist, ist der erfindungsgemäße Mess-schieber auch bei der Messung des Abstands einer Bohrung zu einer Außenkante oder im Falle, dass beide Messkörper sich zumindest abschnittsweise kegelförmig verjüngend ausgebildet sind, ist auch die Messung des Abstands von Lochmittelpunkt zu Lochmittelpunkt möglich.

In besonders bevorzugter Weise weist der sich kegelförmig verjüngend ausgebildete Messkörper eine Zentrumsachse auf, die in der Messebene liegt, und wobei der Messkörper des ersten Messschenkels eine Flanke aufweist, die einer am Messkörper des zweiten Messschenkels ausgebildeten Flanke zugewandt ist, wobei die beiden Flanken in der Messebene liegen. Die Messkörper können also an einander zugewandten Seitenflächen jeweils einseitig abgeflacht sein. Die Flanken können sich beim Überlappen der Messkörper, d. h. bei der Relativbewegung der Messschenkel zueinander, berühren, beispielsweise aneinander abgleiten.

Es ist möglich, dass der sich kegelförmig verjüngend ausgebildete Messkörper und eine als Anschlagelement ausgebildeter mit einer Anschlagfläche ausgestatteter Messkörper ein Messkörperpaar bilden. In diesem Fall ist das Messkörperpaar aus kegelförmigen Messkörper und Anschlagelement zur Abstandsmessung zwischen einer Außenkante und einem Lochmittelpunkt, beispielsweise Bohrungsmittelpunkt, geeignet.

Es ist beispielsweise möglich, dass das Anschlagelement schwertartig ausgebildet ist.

Es ist möglich, dass der sich kegelförmig verjüngend ausgebildete Messkörper Bestandteil des ersten Messschenkels ist, der zweckmäßigerweise als am Stab ausgebildeter, feststehender Messschenkel ausgestaltet ist. Der als Anschlagelement ausgebildete Messkörper kann dann Bestandteil des zweiten Messschenkels sein, der dann zweckmäßigerweise am Schieberelement angeordnet ist. Prinzipiell wäre es jedoch auch denkbar, das Anschlagelement feststehend am Stab und den kegelförmigen Messkörper am Schieberelement anzuordnen.

Bei einer Weiterbildung der Erfindung sind sowohl der Messkörper des ersten Messschenkels als auch der Messkörper des zweiten Messschenkels sich kegelförmig verjüngend ausgebildet.

In besonders bevorzugter Weise sind die beiden Messkörper jeweils als Halbkegel ausgebildet, miteinander zugewandten, in der Messebene liegenden Flanken, die derart ausgebildet sind, dass bei einer Überlappung, bei der die Zentrumsachsen der Halbkegel fluchtend zueinander ausgerichtet sind, ein Vollkegel gebildet wird.

Bei einer Weiterbildung der Erfindung weist die Anzeigeeinheit eine analoge Anzeigeskala und/oder ein digitales Anzeigeelement auf.

Zweckmäßigerweise umfasst die analoge Anzeigeskala eine Nonius-Skala oder ist als Rundskala ausgebildet.

In besonders bevorzugter Weise sind dem ersten und/oder zweiten Messschenkel Höhenverstellmittel zur Höhenverstellung des betreffenden Messkörpers in Achsrichtung der Querachse zugeordnet.

Dadurch ist es möglich, Messungen an Werkstücken vorzunehmen, die einen Versatz oder eine Stufe aufweisen, wo also beispielsweise eine Außenkante des Werkstücks tiefer liegt als beispielsweise eine Bohrung im Werkstück.

Es ist möglich, dass die Höhenverstellmittel wenigstens ein einerseits mit dem Stab und/oder mit dem Schieberelement und andererseits mit dem zugeordneten Messkörper verbundenes längenveränderliches Aufhängeelement aufweisen.

Das Aufhängeelement kann beispielsweise als Teleskopstab ausgebildet sein. Es ist möglich eine oder beide Messschenkel mit derartigen Aufhängeelementen auszustatten.

Der erfindungsgemäße Messschieber gemäß Anspruch 13 besitzt einen eine Längsachse aufweisenden Basiskörper, in dem ein Schieberelement entlang der Längsachse des Basiskörpers beweglich geführt ist, wobei anhand der Relativposition von Basiskörper und Schieberelement ein Bohrungsdurchmesser einer Bohrung in einem Werkstück bestimmbar ist und durch eine Anzeigeeinheit des Messschiebers anzeigbar ist.

Der erfindungsgemäße Messschieber gemäß Anspruch 13 zeichnet sich dadurch aus, dass der Basiskörper eine an einer eine Bohrungsöffnung der Bohrung umgebenen Werkstückfläche des Werkstücks anlegbare Anlagefläche und das Schieberelement einen Messkegel aufweist, der in Achsrichtung der Längsachse des Basiskörpers ausgerichtet ist und der zu seinem freien Ende hin sich zumindest abschnittsweise kegelförmig verjüngend ausgebildet ist, derart, dass er beim Messvorgang durch die Bohrungsöffnung hindurch in die zugeordnete Bohrung je nach Bohrungsdurchmesser mehr oder weniger weit selbstzentrierend eintauchen kann und mittels der Anzeigeeinheit ein der Eintauchtiefe des Messkegels entsprechender Bohrungsdurchmesser anzeigbar ist.

Die am Basiskörper ausgebildete Anlagefläche in Kombination mit dem in die Bohrung eintauchbaren Messkegel gewährleistet eine verkanntfreie Messung, wodurch Handhabungsfehler beim Messen von Bohrungsdurchmessern weitestgehend vermieden werden. Der Bohrungsdurchmesser kann dabei direkt an der Anzeigeeinheit abgelesen werden.

Bei der Anzeigeeinheit kann es sich wiederum um eine analoge Anzeigeskala und/oder ein digitales Anzeigeelement handeln.

Die analoge Anzeigeskala kann eine Nonius-Skala umfassen oder als Rundskala ausgebildet sein.

Bei einer Weiterbildung der Erfindung weist der Basiskörper einen mit der Anlagefläche ausgestatteten Fußabschnitt und einen mit der Führung für das Schieberelement ausgestatteten Führungsabschnitt auf. Zweckmäßigerweise umfasst der Führungsabschnitt einen nutartigen Führungskanal, der den Basiskörper in Längsrichtung durchsetzt und in dem ein Lagerabschnitt des Schieberelements verschieblich aufgenommen ist.

Bevorzugte Ausführungsbeispiele der Erfindung sind in der Zeichnung dargestellt und werden im Folgenden näher erläutert. Die Zeichnungen zeigen:
- Figur 1: eine Seitenansicht auf ein erstes Ausführungsbeispiel des erfindungsgemäßen Messschiebers,
- Figur 2: der Messschieber von Figur 1 beim Messen des Abstands zwischen einer Außenkante und einem Lochmittelpunkt einer Bohrung,
- Figur 3: einen Schnitt durch die beiden Messkörper der Messschenkel entlang der Linie III-III in Figur 2,
- Figur 4: eine Seitenansicht des Messschiebers von Figur 1 bei vollständig zusammengefahrenen Messschenkeln,
- Figur 5: eine Seitenansicht eines zweiten Ausführungsbeispiels des erfindungsgemäßen Messschiebers,
- Figur 6: eine Frontansicht auf den Messschieber von Figur 5,
- Figur 7: eine Seitenansicht des Messschiebers von Figur 5 beim Messen des Abstandes zweier höhenversetzt zueinander liegender Bohrungen,
- Figur 8: eine Frontansicht des Messschiebers von Figur 7,
- Figur 9: eine Seitenansicht eines dritten Ausführungsbeispiels des erfindungsgemäßen Messschiebers und
- Figur 10: der Messschieber von Figur 9 beim Eintauchen in eine zugeordnete Bohrung zur Bestimmung des Bohrungsdurchmessers.

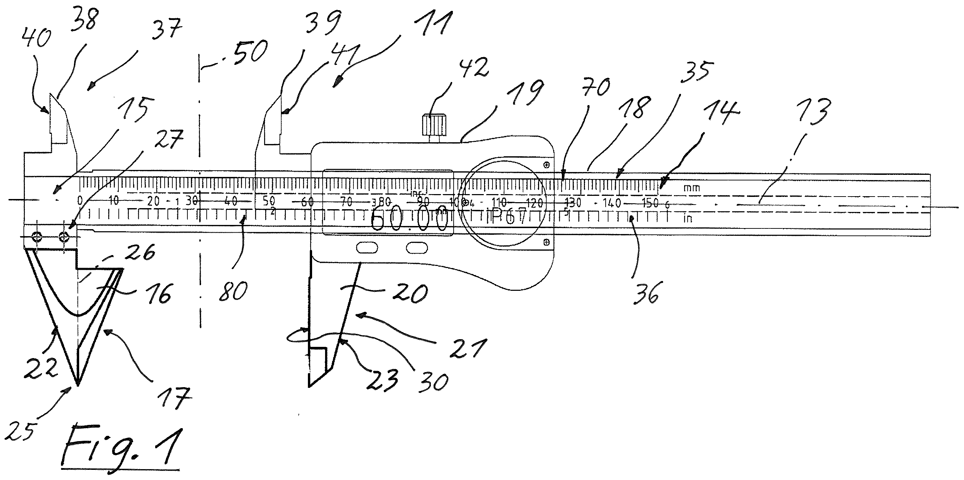

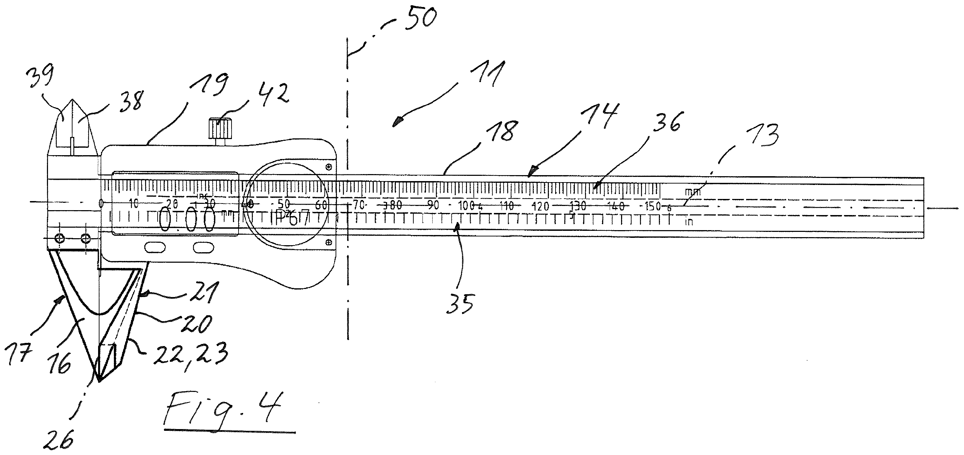

Die Figuren 1 bis 4 zeigen ein erstes Ausführungsbeispiel des erfindungsgemäßen Messschiebers 11, der insbesondere zur Abstandsmessung an Werkstücken 12 beispielsweise auf dem Gebiet des Maschinen- und Metallbaus eingesetzt wird.

Der Messschieber 11 weist einen mit einer Längsachse 13 ausgestatteten Stab 14 auf.

Der Stab 14 besitzt einen Frontabschnitt 15, an dem ein mit einem Messkörper 16 ausgestatteter erster Messschenkel 17 angeordnet ist, der in der Achsrichtung einer zu der Längsachse 13 rechtwinkligen Querachse 50 von dem Stab 14 weg ragt.

Der Stab 14 besitzt ferner ein sich an den Frontabschnitt 15 entlang der Längsachse 13 anschließenden Führungsabschnitt 18, an dem entlang der Längsachse 13 ein Schieberelement 19 beweglich geführt ist.

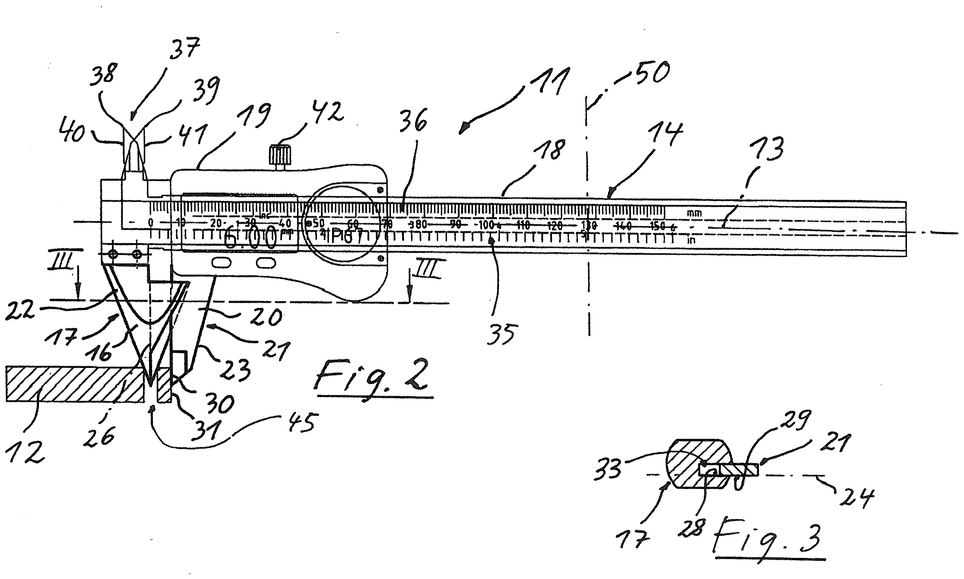

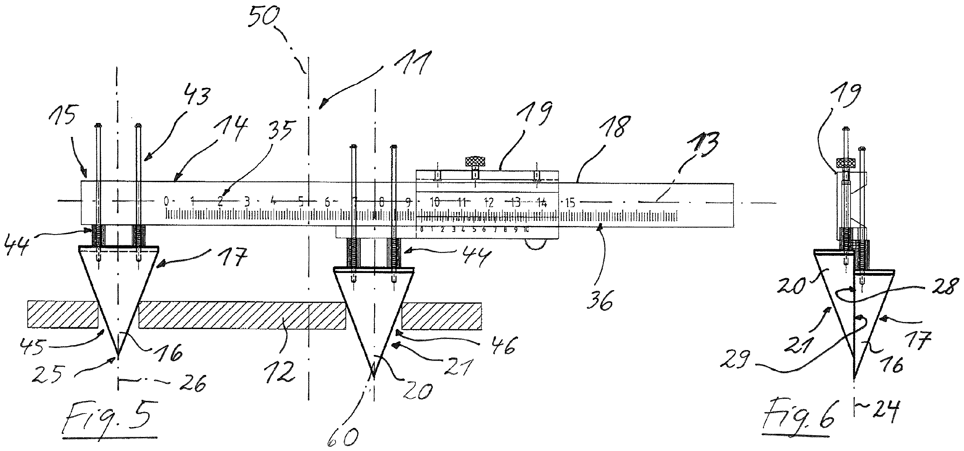

An dem Schieberelement 19 ist ein mit einem Messkörper 20 ausgestatteter, dem ersten Messschenkel 17 gegenüberliegender zweiter Messschenkel 21 derart angeordnet, dass der Abstand der beiden jeweils eine Außenkontur 22, 23 aufweisenden Messkörper 16, 20 entlang einer von der Längsachse 13 und der Querachse 50 aufgespannten Messebene 24 (Figuren 3 und 6) zueinander veränderbar ist.

Wie insbesondere in den Figuren 1 und 2 gezeigt, ist gemäß dem ersten Ausführungsbeispiel des Messschiebers 11 der Messkörper 16 des ersten Messschenkels 17 sich zu seinem freien Ende 25 hin zumindest abschnittsweise kegelförmig verjüngend ausgebildet. Dieser kegelförmige Messkörper 16 besitzt eine Zentrumsachse 26, die in der Messebene 24 liegt.

Wie insbesondere in Figur 1 gezeigt, ist der Messkörper 16 des ersten Messschenkels 17 über Befestigungsmittel 27 lösbar am Frontabschnitt 15 des Stabs 14 befestigt. Der erste Messschenkel 17 ist ein feststehender Messschenkel, d. h. der Messschenkel 17 ist gegenüber dem Stab 14 unbeweglich an diesem befestigt.

Der Messkörper 16 des ersten Messschenkels 17 weist eine Flanke 28 auf, die einer am Messkörper 20 des zweiten Messschenkels 21 ausgebildeten Flanke 29 zugewandt ist, wobei die beiden Flanken in der Messebene 24 liegen.

Ein wesentlicher Aspekt der Erfindung ist, dass die Außenkonturen 22, 23 der Messkörper 16, 20 Messstellungen zueinander einnehmen können, in denen sich die Messkörper 16, 20 in der Messebene 24 in der Achsrichtung der Längsachse 13 überlappen.

Wie bereits erwähnt, ist der Messkörper 16 des ersten Messschenkels 17 gemäß dem ersten Ausführungsbeispiel der Erfindung sich zu seinem freien Ende 25 hin kegelförmig verjüngend ausgebildet. Der Messkörper 20 des zweiten Messschenkels 21 hingegen ist als Anschlagelement ausgestaltet, das eine Anschlagfläche 30 besitzt. Zweckmäßigerweise ist der als Anschlagelement ausgebildete Messkörper 20 am zum Frontabschnitt 15 des Stabs 14 hin zugewandten Ende des Schieberelements 19 angeordnet. Durch die Verschiebung des Schieberelements entlang der Längsachse 13 des Stabs 14 lässt sich also der Abstand zwischen der Zentrumsachse 26 am ersten Messschenkel und der Anschlagfläche 30 am zweiten Messschenkels verändern, wodurch Maße zwischen einer Außenkante 31 und einem Lochmittelpunkt, insbesondere Bohrungsmittelpunkt eines Werkstücks abgenommen werden können.

Durch die Möglichkeit, dass sich die Messkörper 16, 20 in der Achsrichtung der Längsachse überlappen können, können auch kleinste Abstände zwischen einer Außenkante 31 und einem Bohrungsmittelpunkt 32 gemessen werden.

Gemäß dem ersten Ausführungsbeispiel des Messschiebers 11 kann, wie insbesondere in Figur 3 gezeigt, das schwertartige Anschlagelement zur Erzielung der Überlappung in eine in Richtung zum Anschlagelement hin offene, in der Messebene liegende Aufnahmenut 33 (Figur 3) am Messkörper 16 des ersten Messschenkels 17 einfahren, wodurch bei vollständigem Einfahren die Zentrumsachse 26 des Messkörpers 16 des ersten Messschenkels 17 und die Anschlagfläche 30 am Messkörper 20 des zweiten Messschenkels 21 fluchtend übereinanderliegen.

Wie insbesondere in Figur 3 gezeigt, liegen sich die beiden einerseits am Anschlagelement und andererseits an der Aufnahmenut 33 vorhandenen Flanken 28, 29 einander gegenüber und können sich beim Einfahren des Anschlagelements in die Aufnahmenut 33 berühren.

Wie insbesondere in Figur 1 gezeigt, besitzt der Messschieber 11 ferner eine Anzeigeeinheit 35 zum Anzeigen des durch den Abstand der Messkörper 16, 20 der Messschenkel 17, 21 zueinander definierten Messwerts.

Die Anzeigeeinheit umfasst im Beispielsfall des ersten Ausführungsbeispiels eine analoge Anzeigeskala 36. Die analoge Anzeigeskala 36 umfasst im Beispielsfall eine insbesondere am Stab 14 ausgebildete Hauptskala 70 und eine am Schieberelement 19 ausgebildete Nonius-Skala (nicht dargestellt). Dabei liegt der Nullpunkt der Anzeigeskala 36 (Hauptskala 70) auf der Zentrumsachse 26 des Messkörpers 16 des ersten Messschenkels 17. Die Anzeigeskala 36 erstreckt sich vom Nullpunkt in Längsrichtung des Stabs 14. Die Anschlagfläche 30 am Anschlagelement liegt in Verlängerung zur Stirnseite des Schieberelements 19, wodurch der Messwert direkt an der Stirnseite des Schieberelements 19 abgelesen werden kann. Mit der überlagerten Nonius-Skala sind auch Zehntel-Werte direkt ablesbar.

Wie ferner in Figur 1 gezeigt, ist an der Längsseite des Stabs 14, der der Längsseite mit den beiden Messschenkeln 17, 21 entgegengesetzt ist, ein weiteres Messschenkel-Paar 38 angeordnet. Dieses Messschenkelpaar 37 ist auch als Neben-Messschenkelpaar 37 bzw. Innen-Messschenkelpaar zu bezeichnen und besitzt wiederum zwei Neben-Messschenkel 38, 39, von denen ein erster Neben-Messschenkel 38 an der Längsseite des Stabs 14 und der andere Neben-Messschenkel 39 am Schieberelement 19 angeordnet ist.

Beide Neben-Messschenkel 38, 39 sind als schwertartige Anschlagelemente ausgebildet und besitzen jeweils Anschlagflächen 40, 41, die voneinander abgewandt sind, so dass der Abstand zwischen zwei Kanten bestimmbar sind, zu denen beispielsweise auch Innenkanten einer Durchbrechung zählen.

Wie insbesondere in Figur 1 gezeigt, besitzt das Schieberelement 19 ferner eine Feststellschraube 42 zum Feststellen des Schieberelements gegenüber dem Stab, wodurch der gemessene Messwert fixierbar ist.

Wie bereits vorstehend erwähnt, ist mit dem kegelförmigen Messkörper des ersten Messschenkels und dem dazugehörigen schwertartigen Anschlagelement des zweiten Messschenkels 21 der Abstand zwischen einer Außenkante 31 und dem Bohrungsmittelpunkt 32 einer im Werkstück 12 ausgebildeten Bohrung 45 bestimmbar.

Hierzu wird zunächst der sich kegelförmig verjüngende Messkörper 16 des ersten Messschenkels 17 an die zugeordnete Bohrung 45 herangeführt und kann dort mit seinem spitzen, freien Ende in die Bohrung 45 eintauchen, wobei eine Selbstzentrierung stattfindet. Danach kann das Schieberelement 19 mit dem Anschlagelement an die Außenkante 31 des Werkstücks 12 herangefahren werden, wobei bei kleinen Abständen das schwertartige Anschlagelement in die Aufnahmenut am kegelförmigen Messkörper 16 eintaucht. Der Messwert kann dann direkt an der Hauptskala am Stab 14 in Kombination der Nonius-Skala abgelesen werden.

Die Figuren 5 bis 8 zeigen ein zweites Ausführungsbeispiel des erfindungsgemäßen Messschiebers 11. Der Messschieber 11 gemäß dem zweiten Ausführungsbeispiel besitzt einen mit einer Längsachse 13 ausgestatteten Stab 14, an dem ein mit einem Messkörper 16 ausgestatteter erster Messschenkel 17 angeordnet ist. Wie beim zuvor beschriebenen ersten Ausführungsbeispiel ist auf dem Stab 14 ein Schieberelement 19 in StabLängsrichtung verschieblich gelagert, an dem wiederum ein mit einem Messkörper 20 ausgestatteter zweiter Messschenkel 21 angeordnet ist.

Im Unterschied zu dem zuvor beschriebenen ersten Ausführungsbeispiel sind gemäß dem zweiten Ausführungsbeispiel beide Messkörper 16, 20 sich zu deren freien Ende hin zumindest abschnittsweise kegelförmig verjüngend ausgebildet.

Mit einem derartigen Messschieber 11 ist es möglich, Abstände zwischen zwei Lochmittelpunkten, beispielsweise Bohrungsmittelpunkten 32, zu bestimmen.

Wie insbesondere in Figur 6 gezeigt, sind die Außenkonturen 22, 23 der Messkörper 16, 20 der Messschenkel 17, 21 wiederum derart ausgebildet, dass die Messschenkel 17, 21 Messstellungen zueinander einnehmen können, in denen sich die Messkörper 16, 20 in der Messebene 24 in der Achsrichtung der Längsachse 13 zu überlappen.

Gemäß gezeigtem zweiten Ausführungsbeispiel handelt es sich bei den Messkörpern 16, 20 jeweils um Halbkegel, die einseitig abgeflacht sind. Wie insbesondere in Figur 6 gezeigt, weisen die beiden Messkörper 16, 20 einander zugewandte Flanken 28, 29 auf, so dass die Messkörper 16, 20 vollständig in Überlappung gebracht werden können, so dass die jeweiligen Zentrumsachsen 26, 60 exakt übereinanderliegen können.

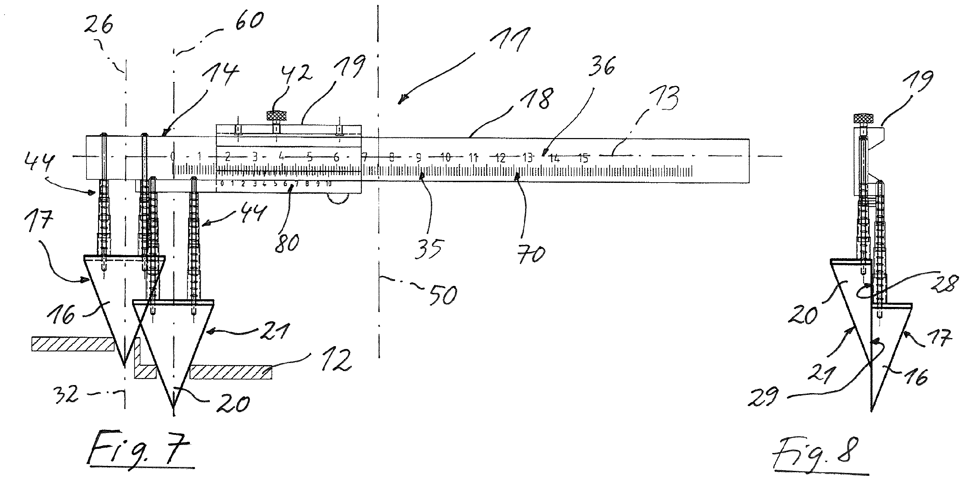

Wie insbesondere in den Figuren 7 und 8 gezeigt, besitzen die Messschenkel 17, 21 Höhenverstellmittel 43 zur Höhenverstellung des betreffenden Messkörpers 16, 20 in Achsrichtung der Querachse 50. Die Höhenverstellmittel 43 weisen wenigstens ein einerseits mit dem Stab 14 (erster Messschenkel) und dem Schieberelement 19 (zweiter Messschenkel) und andererseits mit dem zugeordneten Messkörper 16, 20 verbundenes längenveränderliches Aufhängeelement 44 auf. Im gezeigten Beispielsfall sind je Messkörper 16, 20 zwei Aufhängeelemente 44 vorgesehen, die jeweils als Teleskopstäbe ausgebildet ein können.

Mit der Möglichkeit zur Höhenverstellung der Messkörper 16, 20 ist es möglich, auch den Abstand zwischen zwei Lochmittelpunkten, insbesondere Bohrungsmittelpunkten 32, zu bestimmen, die nicht auf derselben Höhe liegen, beispielsweise innerhalb eines Werkstücks durch einen Höhenversatz, beispielsweise in Form einer Schulter bzw. einem Absatz, voneinander getrennt sind.

Der Messschieber 11 gemäß zweitem Ausführungsbeispiel besitzt wiederum eine Anzeigeeinheit 35 in Form einer analogen Anzeigeskala 36 mit einer Hauptskala 70 am Stab 14 und einer Nonius-Skala 80 am Schieberelement 19. Im Gegensatz zur Anzeigeskala des ersten Ausführungsbeispiels liegt hier der Nullpunkt der Hauptskala 70 nicht fluchtend zur Zentrumsachse 26 des Messkörpers 16 des ersten Messschenkels 17, sondern mit einem Versatz hierzu, wodurch die Ablesbarkeit durch die Aufhängeelemente 44, die zweckmäßigerweise links und rechts der Zentrumsachse 26 angeordnet sind, nicht behindert wird.

Zur Bestimmung des Abstands zweier Bohrungsmittelpunkte 32 in einem Werkstück 12 wird zunächst der kegelförmige Messkörper 16 des ersten Messschenkels 17 an die erste Bohrung 45 herangeführt und taucht dann über die Bohrungsöffnung in die Bohrung 45 ein. Es findet wiederum eine Selbstzentrierung statt, wodurch ein Verkanten beim Einführen des Messkörpers verhindert wird. Anschließend wird der Messschieber 11 mit dem kegelförmigen Messkörper des zweiten Messschenkels 21 an die zweite Bohrung 46 herangeführt und kann dort ebenfalls über die zugeordnete Bohrungsöffnung in die Bohrung 46 eintauchen. Der Messwert kann dann direkt über die Hauptskala 70 und die Nonius-Skala 80 abgelesen werden.

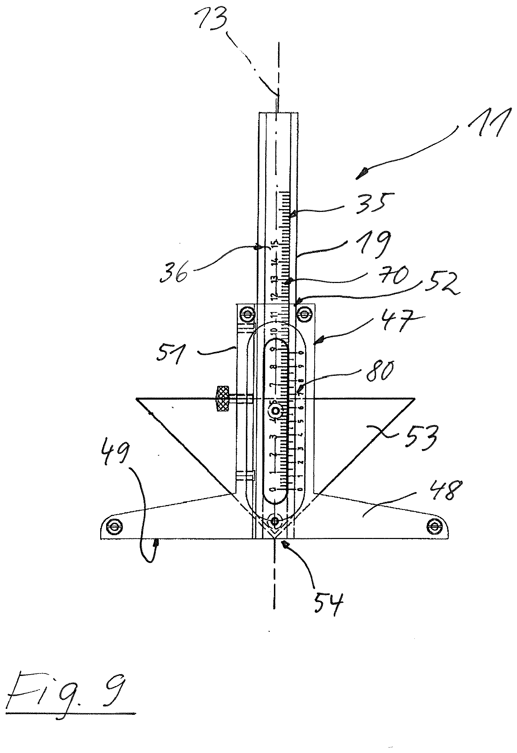

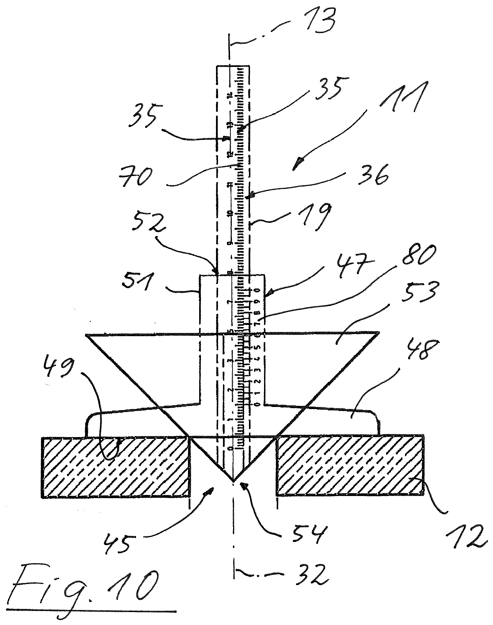

Die Figuren 9 und 10 zeigen ein drittes Ausführungsbeispiel des erfindungsgemäßen Messschiebers 11.

Im Gegensatz zu den zuvor beschriebenen Ausführungsbeispielen ist dieser Messschieber 11 zur Bestimmung von Lochdurchmessern, insbesondere Bohrungsdurchmessern von in einem Werkstück 12 ausgebildeten Löchern bzw. Bohrungen geeignet.

Der Messschieber 11 gemäß dem dritten Ausführungsbeispiel besitzt eine mit einer Längsachse 13 ausgestatteten Basiskörper 47, an dem ein Fieberelement 19 entlang der Längsachse 13 des Basiskörpers 47 beweglich geführt ist, wobei er anhand der Relativposition von Basiskörper 47 und Schieberelement 19 ein Bohrungsdurchmesser einer Bohrung 45 in einem Werkstück 12 bestimmbar ist. Wie insbesondere in Figur 9 gezeigt, besitzt der Basiskörper 47 einen Fußabschnitt 48, an dessen Unterseite eine an einer eine Bohrungsöffnung der Bohrung 45 umgebenen Werkstückfläche des Werkstücks 12 anlegbare Anlagefläche 49 ausgebildet ist.

Der Basiskörper 47 besitzt ferner ein in dessen Längsrichtung 13 sich an den Fußabschnitt 48 anschließenden Führungsabschnitt 51, zur Führung des Schieberelements 19.

Zweckmäßigerweise besitzt der Führungsabschnitt 51 eine Führungsnut 52, in dem der Führungsabschnitt 18 des Schieberelements 19 beweglich geführt aufgenommen ist.

Im Gegensatz zu den zuvor beschriebenen Ausführungsbeispielen ist beim dritten Ausführungsbeispiel des Messschiebers 11 nur ein Messschenkel in Form eines Messkegels 53 vorgesehen, der in Achsrichtung der Längsachse 13 des Basiskörpers 47 ausgerichtet ist und der sich zu seinem freien Ende 54 hin zumindest abschnittsweise kegelförmig verjüngend ausgebildet ist, derart, dass er beim Messvorgang durch die Bohrungsöffnung hindurch in die zugeordnete Bohrung 45 je nach Bohrungsdurchmesser mehr oder weniger weit selbstzentrierend eintauchen kann.

Der Messschieber 11 gemäß drittem Ausführungsbeispiel besitzt ferner ebenfalls eine Anzeigeeinheit 35 in Form einer analogen Anzeigeskala 36 mit Hauptskala 70 am Schieberelement und Nonius-Skala 80 am Basiskörper 47.

Wie insbesondere in Figur 9 gezeigt, wird zur Bestimmung des Bohrungsdurchmessers einer in dem Werkstück 12 ausgebildeten Bohrung 45 zunächst der Fußabschnitt 48 des Basiskörpers mit seiner Anlagefläche 49 an die die Bohrungsöffnung der Bohrung 45 umgebenen Werkstückfläche des Werkstücks 12 angelegt. Danach wird das Schieberelement 19 mit dem Messkegel 53 verstellt, so dass der Messkegel 53 über die Bohrungsöffnung in die zugeordnete Bohrung 45 eintaucht. Die Anlagefläche 49 am Basiskörper 47 verhindert ein Verkanten beim Messvorgang. Durch die Kegelform erfolgt eine Selbstzentrierung des Messkegels 53 beim Eintauchen in die Bohrung 45. Der Wert des Bohrungsdurchmessers kann dann direkt an der Hauptskala 70 in Kombination mit der Nonius-Skala 80 abgelesen werden.

Es wird ein Spezial-Kegelmessverfahren vorgeschlagen:

### Name: Spezial Kegelmessverfahren

### Gebiet:

Messtechnik der Abstandsmessung von Hand: von Bohrungen, Gewinde, Löcher, Langlöcher zur Außenkante bzw. von Loch zu Loch, egal ob gleiche Durchmesser, in horizontaler, sowie vertikaler Richtung.

### Einsatzbereiche:

Metall, Holz, Kunststoff verarbeitenden Betriebe in privaten Bereich

### Beispiele:

Maschinen- und Anlagenbau
Schlossereien
KFZ - Firmen
Private Haushalte
Modellbau usw.

### Stand der Technik:

Die herkömmlichen, bekannten Messverfahren erlauben bei runden oder länglichen Löchern zur Außenkante, kein direktes ablesen, insbesondere bei engen Abständen, wo dies wiederum gar nicht möglich ist, von Ist-Maßen, mit der Hand. Dies wird nun durch Ermitteln des Lochdurchmessers und durch Umrechnung möglich. Beim Bohrungsabstand-Messen mit verschiedenen Lochgrößen bzw. auf unterschiedlichen Höhen, funktioniert dies nur manuell mit der Hand, da der bewegliche Messkegel von Hand auf die vorgegebene Messhöhe bzw. Bohrungsdurchmesser gesetzt werden muss und dabei arretiert bzw. festgestellt werden muss. Genauso verhält es sich bei einem normalen Bohrungsdurchmesser mit einem Messschieber zu messen, da es bei diesem zum Verkanten des Messschenkels kommen kann.

### Neuerung:

Mit dem neuen und speziellen Kegelkopf (Spezial-Kegelmessverfahren) ist eine Umrechnung beim Messen von einem Bohrungsmittelpunkt zur Außenkante nicht mehr erforderlich. Die tatsächlichen Ist-Maße können unabhängig vom Bohrungsdurchmesser direkt abgelesen werden. Das neuartige Kegelmessverfahren ermöglicht das direkte Ablesen von Bohrungsabständen, von einer Außenkante.

Die Bohrungsabstände dürfen auch sehr eng beieinander liegen, da die Messkegel so gebaut sind, dass diese auch eine Messung bis auf 0 mm erlauben, da der neue Messkegel eine Aussparung hat, indem der bewegliche Messschenkel eintauchen kann bzw. eine Überlappung möglich ist.

Das Spezial-Kegelmessverfahren ist auch für das Messfehler freie Messen von Bohrungsdurchmesser bestens geeignet.

Die Messkegel sind je nach Verwendungszweck bzw. einsatzfrei gestaltbar. Sie werden auf unterschiedliche Weise an speziell für diesen Einsatz ausgeführten Mess-Schieber oder an einem Messtaster befestigt. Dieses ist auch bei herkömmlichen Mess-Schieber oder Messtaster durch einen Umbau möglich.

z.B. beim Messen von:
Bohrungsmitte - Außenkante
Außenkante - Bohrungsmitte
Bohrungsmitte - Bohrungsmitte mit einem anderen Durchmesser und auf einer anderen Ebene zur Außenkante für die Ermittlung eines Bohrradius bzw. Lochkreis ermitteln, z. B. bei 90°oder 120°oder ähnlichem, siehe Figur 5.

Es wird ein Messkegel für Messgeräte vorgeschlagen, mit der Möglichkeit, den gegenüberliegenden Mess-Schenkel auf 0 mm zusammenzuschieben, so dass immer noch der Kegeldurchmesser erhalten bleibt. Es ist ferner eine spezielle Kegelhälfte zu erwähnen, die mit einer gegenüberliegenden Kegelhälfte zusammenwirkt, die sich wiederum automatisch in der Höhe bzw. an den Bohrungsdurchmesser anpasst. Ferner ist ein spezieller Kegel oder eine Kegelhälfte vorgesehen, die rechtwinklig zu einer festen Messebene ist.

## Patentansprüche

1. Messschieber, mit einem eine Längsachse (13) aufweisenden Stab (14), an dem ein mit einem Messkörper (16) ausgestatteter erster Messschenkel (17) angeordnet ist, der in der Achsrichtung einer zu der Längsachse (13) rechtwinkligen Querachse (50) von dem Stab (14) weg ragt, und mit einem am Stab (14) entlang dessen Längsachse (13) beweglich geführten Schieberelement (19), an dem ein mit einem Messkörper (20) ausgestatteter, dem ersten Messschenkel (17) gegenüberliegender zweiter Messschenkel (21) derart angeordnet ist, dass der Abstand der beiden jeweils eine Außenkontur (22, 23) aufweisenden Messkörper (16) entlang einer von der Längsachse (13) und der Querachse (50) aufgespannten Messebene (24) zueinander veränderbar ist, wobei der Messkörper (16) des ersten Messschenkels (17) und/oder der Messkörper (20) des zweiten Messschenkels (21) sich zu seinem freien Ende (25) hin zumindest abschnittsweise kegelförmig verjüngend ausgebildet ist, derart, dass er beim Messvorgang in eine zugeordnete Bohrung (45) je nach Bohrungsdurchmesser mehr oder weniger weit selbstzentrierend eintauchen kann, und wobei der Messschieber (11) eine Anzeigeeinheit (35) zum Anzeigen des durch den Abstand der Messkörper (16, 20) der Messschenkel (17, 21) zueinander definierten Messwertes aufweist, **dadurch gekennzeichnet, dass** die Außenkonturen (22, 23) der Messkörper (16, 20) der Messschenkel (17, 21) derart ausgebildet sind, dass die Messschenkel (17, 21) Messstellungen zueinander einnehmen können, in denen sich die Messkörper (16, 20) in der Messebene (24) in der Achsrichtung der Längsachse (13) überlappen.

2. Messschieber nach Anspruch 1, **dadurch gekennzeichnet, dass** der sich kegelförmig verjüngend ausgebildete Messkörper (16) eine Zentrumsachse (26) aufweist, die in der Messebene (24) liegt, und wobei der Messkörper (16) des ersten Messschenkels (17) eine Flanke (28) aufweist, die einer am Messkörper (20) des zweiten Messschenkels (21) ausgebildeten Flanke (29) zugewandt ist, wobei die beiden Flanken (28, 29) in der Messebene liegen.

3. Messschieber nach Anspruch 1 oder 2, **dadurch gekennzeichnet, dass** der sich kegelförmig verjüngend ausgebildete Messkörper (16) und ein als Anschlagelement ausgebildeter, mit einer Anschlagfläche (30) ausgestatteter Messkörper (20) ein Messkörperpaar bilden.

4. Messschieber nach Anspruch 3, **dadurch gekennzeichnet, dass** das Anschlagelement schwertartig ausgebildet ist.

5. Messschieber nach einem der vorhergehenden Ansprüche, **dadurch gekennzeichnet, dass** der sich kegelförmig verjüngend ausgebildete Messkörper (16) Bestandteil des ersten Messschenkels (17) und der als Anschlagelement ausgebildete Messkörper (20) Bestandteil des zweiten Messschenkels (21) ist.

6. Messschieber nach einem der Ansprüche 1 oder 2, **dadurch gekennzeichnet, dass** sowohl der Messkörper (16) des ersten Messschenkels (17) als auch der Messkörper (20) des zweiten Messschenkels (21) sich zu deren Enden hin kegelförmig verjüngend ausgebildet sind.

7. Messschieber nach Anspruch 6, **dadurch gekennzeichnet, dass** die beiden Messkörper (16, 20) jeweils als Halbkegel ausgebildet sind, mit einander zugewandten, in der Messebene (24) liegende Flanken, die derart ausgebildet sind, dass bei einer Überlappung, bei der die Zentrumsachsen (26, 60) der Halbkegel fluchtend zueinander ausgerichtet sind ein Vollkegel gebildet ist.

8. Messschieber nach einem der vorhergehenden Ansprüche, **dadurch gekennzeichnet, dass** die Anzeigeeinheit (35) eine analoge Anzeigeskala (36) und/oder ein digitales Anzeigeelement aufweist.

9. Messschieber nach Anspruch 8, **dadurch gekennzeichnet, dass** die analoge Anzeigeskala (36) eine Nonius-Skala umfasst oder die analoge Anzeigeskala als Rundskala ausgebildet ist.

10. Messschieber nach einem der vorhergehenden Ansprüche, **dadurch gekennzeichnet, dass** dem ersten und/oder zweiten Messschenkel Höhenverstellmittel (43) zur Höhenverstellung des betreffenden Messkörpers (16, 20) in Achsrichtung der Querachse (50) zugeordnet sind.

11. Messschieber nach Anspruch 10, **dadurch gekennzeichnet, dass** die Höhenverstellmittel (43) wenigstens ein einerseits mit dem Stab (14) und/oder mit dem Schieberelement (19) und anderseits mit dem zugeordneten Messkörper (16, 20) verbundenes längenveränderliches Aufhängeelement (44) aufweisen.

12. Messschieber nach Anspruch 11, **dadurch gekennzeichnet, dass** das Aufhängelement (44) als Teleskopstab ausgebildet ist.

13. Messschieber, mit einem eine Längsachse (13) aufweisenden Basiskörper (47), an dem ein Schieberelement (19) entlang der Längsachse (13) des Basiskörpers (47) beweglich geführt ist, wobei anhand der Relativposition von Basiskörper (47) und Schieberelement (19) ein Bohrungsdurchmesser einer Bohrung (45) in einem Werkstück (12) bestimmbar ist und durch eine Anzeigeeinheit (35) des Messschiebers (11) anzeigbar ist, **dadurch gekennzeichnet, dass** der Basiskörper (37) eine an einer eine Bohrungsöffnung der Bohrung umgebenden Werkstückfläche des Werkstücks (12) anlegbare Anlagefläche (49) und das Schieberelement (19) einen Messkegel (53) aufweist, der in Achsrichtung der Längsachse (13) des Basiskörpers (47) ausgerichtet ist und der sich zu seinem freien Ende (54) hin zumindest abschnittsweise kegelförmig verjüngend ausgebildet ist, derart, dass er beim Messvorgang durch die Bohrungsöffnung hindurch in die zugeordnete Bohrung (45) und je nach Bohrungsdurchmesser mehr oder weniger weit selbstzentrierend eintauchen kann und mittels der Anzeigeeinheit (35) ein der Eintauchtiefe des Messkegels (53) entsprechender Bohrungsdurchmesser anzeigbar ist.
